# EUROPÄISCHE PATENTSCHRIFT

(11) **EP 2 997 093 B1**
(45) Veröffentlichungstag und Bekanntmachung des Hinweises auf die Patenterteilung: **17.01.2018**
(21) Anmeldenummer: 14728144.8
(22) Anmeldetag: 27.05.2014
(51) Int. Cl.: C09D 5/00

(54) **OBERFLÄCHENBESCHICHTUNG ZUR POTENTIALABFÜHRUNG AN NICHTSTATISCHEN ANLAGEN UND VERFAHREN**
SURFACE COATING FOR DISSIPATING ELECTRICAL CHARGE ON ANTI-STATIC INSTALLATIONS AND PROCESS
REVÊTEMENT DE SURFACE POUR LA DISSIPATION DE POTENTIEL SUR DES DISPOSITIFS NON STATIQUES ET PROCÉDÉ

(30) Priorität: 28.06.2013 DE 102013212737; 08.08.2013 DE 102013215713
(43) Veröffentlichungstag der Anmeldung: 23.03.2016
(73) Patentinhaber: Siemens Aktiengesellschaft, 80333 München (DE)
(72) Erfinder: HUBER, Jürgen, 91058 Erlangen (DE); LANG, Steffen, 91352 Hallerndorf (DE); PLOCHMANN, Bastian, 91413 Neustadt/Aisch (DE)
(86) Internationale Anmeldenummer: PCT/EP2014/060961
(87) Internationale Veröffentlichungsnummer: WO 2014/206676

(56) Entgegenhaltungen:
- DE-A1-102006 000 854
- US-A- 5 876 636
- US-A1- 2006 023 327
- US-A1- 2009 124 743

## Beschreibung

Die Erfindung betrifft eine Oberflächenbeschichtung, welche aus einem Verbundwerkstoff aufgebaut ist.

Bei einer nichtstatischen Industrieanlage, wie beispielsweise einem Windrad, kann ein Blitzschlag große Probleme mit sich führen. Da Windkraftanlagen meist an exponierten Stellen errichtet werden, welche häufig den höchsten Punkt in einem größeren Umfeld darstellen, gelten hier besondere Betrachtungen. Nachdem der höchste Punkt eines vertikalen Windrades, welches sich an einem Mast in größerer Höhe dreht, zu jeder Zeit die Spitze eines Rotorblattes ist, wird der Eintrittsbereich des Blitzes auf einem der Rotorblätter liegen. Die sehr hohe Stromdichte in einem Blitz muss somit durch den Rotor nach unten abgeleitet werden. Somit kommt es bei einem Blitzeinschlag im Rotorblatt, bedingt durch den inneren Widerstand der verwendeten Materialien, zu typischen Blitzschäden, die sich in Form von Bränden, Überhitzung der einzelnen Komponenten, sowie in temperaturbedingten mechanischen Verformungen auswirken.

In bestehenden Windkraftanlagen sind konventionelle, metallische Leiterbahnen entweder komplett an der Außenhaut des Rotorblattes angebracht oder sie verlaufen im Inneren des Rotorblattes, sodass nur das Ende an der Spitze des Rotorblattes aus diesem hervortritt. Eine weitere Form des Blitzschutzes wird durch die Einbringung eines metallischen Netzes in eine deckende Lackschicht über die gesamte Länge des Rotorblattes realisiert. Dadurch entsteht lokal eine metallische Struktur, welche entstehende Ströme und Spannungen durch eine Verbindung zum Stativ der Windkraftanlage auf Erde legt.

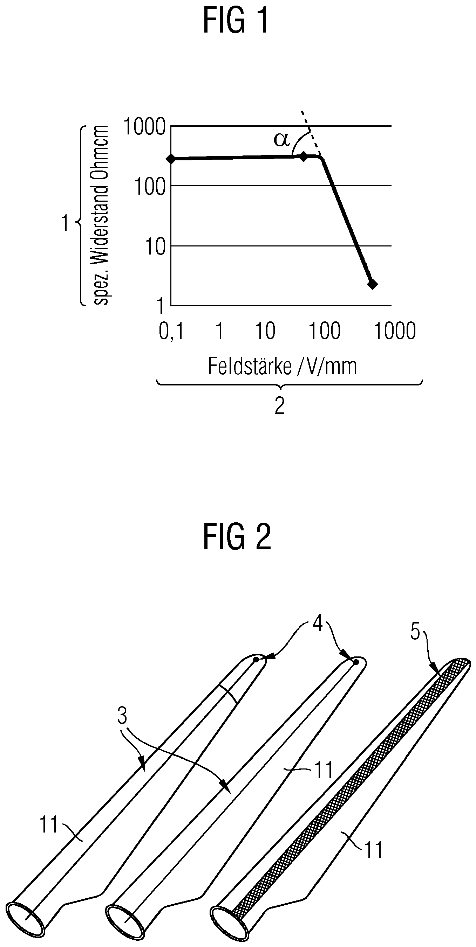

In Figur 2 ist beispielhaft ein Rotorblatt in drei verschiedenen Ausführungen mit Blitzschutzeinrichtungen versehen. dabei weisen die einzelnen Rotorblätter von links nach rechts unterschiedliche Maßnahmen zum Blitzschutz auf. Das in Figur 2 linke Rotorblatt beinhaltet einen unter der Oberfläche verlaufenden elektrischen Leiter, welcher an der Spitze des Rotorblattes körperlich hervortritt. Gleiches gilt für das mittlere Rotorblatt, wobei im Gegensatz zu diesem das linke Rotorblatt in der Nähe des oberen Endes des elektrischen Leiters dieser teilweise als Netz ausgebildet ist.

Zur Erdung des Rotorblattes weist das in Figur 2 rechts liegende Rotorblatt ein Metallgitter auf, welches sich entlang des gesamten Blattes erstreckt.

Der Erfindung liegt die Aufgabe zugrunde, eine Blitzschutz Einrichtung für nichtstatische Anlagen, wie beispielsweise eine Windkraftanlage oder ein Flugzeug, bereitzustellen, sodass Bauteile, wie beispielsweise Rotorblätter an Windkraftanlagen, mit ausreichendem Blitzschutz zur Ableitung des auftretenden Potentialunterschiedes versehen sind und folglich bestehende Probleme hinsichtlich des Brandschutzes oder starker thermischer Belastung minimiert werden.

Die Lösung dieser Aufgabe geschieht durch die jeweilige Merkmalskombination eines Hauptanspruchs.

Der Erfindung liegt die Erkenntnis zugrunde, dass durch eine Oberflächenbeschichtung von, insbesondere in der Luft, bewegten Flächen einer Anlage mit einem temperaturbeständigen Verbundwerkstoff, welcher mit hochleitfähigen Partikeln gefüllt ist, die bei einem Blitz auftretende Potentialdifferenz über die gesamte Oberfläche der Anlage abgebaut werden kann, ohne dass durch eine zu hohe Stromdichte große Schäden an der Anlage auftreten.

Es wird eine Verbundwerkstoffschicht als Oberflächenbeschichtung beschrieben, bestehend aus einem niedertemperaturhärtenden Polymer, besonders einem Polysilazan oder Polysiloxan, welches mit einem Füllstoff aus plättchenförmigen, keramischen Partikeln (14) mit einer elektrisch leitfähigen, metalloxidischen Beschichtung versehen sind, gefüllt ist. Diese ist insbesondere eine Antimonzinnoxid (Sb:Sn02) bzw. mit Antimon dotierte Zinnoxid-Schicht.

Für eine Beschichtung von Rotorblättern ist es vorteilhaft, dass eine flexible Applikation des Verbundwerkstoffs vorhanden ist. Experimentell werden bereits mehrere organische Matrizen in Sprühverfahren als Verbundwerkstoffschichten angewandt, sodass solche Produktgruppen für eine funktionelle Beschichtung einer gekrümmten Oberfläche anwendbar sind und grundsätzlich ein kompletter Rotorflügel über Sprühapplikation beschichtet werden kann.

Die Beschichtung ist ein Verbundwerkstoff, dessen keramischer Füllstoff aus einem plättchenförmigen Substrat wie beispielsweise Glimmer, sowie einer elektrisch leitfähigen, metalloxidischen Beschichtung insbesondere aus Antimonzinnoxid besteht.

Als Matrix werden vorteilhafterweise raumtemperatur- oder niedertemperaturhärtende Stoffe wie Polysiloxan oder Polysilazan eingesetzt.

Weitere Vorteile sind erzielbar, wenn eine Oberflächenbeschichtung bei niedriger mittlerer Temperatur pyrolisiert wird. Dies geschieht, um die Leitfähigkeit der bestehenden Schicht nochmals zu erhöhen.

Als Füllstoffmaterialien können vorzugsweise sehr gut leitfähige Metalloxid-Partikel oder Metall-Partikel eingesetzt werden. Die Form der Füllstoffpartikel kann variieren, beispielsweise zwischen globular- und plättchenförmig. Bei globularen Füllstoffen ist ein sehr hoher Volumenfüllgrad notwendig, beispielsweise bis 50 Vol.-%, wohingegen bei plättchenförmigem Füllstoff sich bei einem geringeren Volumenfüllgrad, beispielsweise 25 Vol.-%, eine stabile elektrische Leitfähigkeit einstellt. Diese wird Perkolationsschwelle genannt. Mischungen aus den vorgenannten Beispielen sind möglich.

Es ist vorteilhaft, einen leicht applizierbaren Lack zu benutzen, welcher vorzugsweise gut sprühbar ist, sodass damit elektrisch hochleitfähige Mikropartikel als Füllung auf vorgefertigte Bauteile aufgebracht werden können, und beispielsweise Rotorblätter von Windkraftanlagen leicht beschichtet und kontaktiert werden können.

Ein wesentlicher Vorteil ergibt sich durch die Teilleitfähigkeit der Beschichtung. Es kommt zu keinem Polarisationseffekt, welcher zu Blitzentstehungen beitragen würde. Somit schwindet die Wahrscheinlichkeit eines Blitzeinschlages bei dieser Vorgehensweise.

Bei einem Blitzschlag hingegen kommt es durch die hohe Feldstärke, die dabei auftritt, zu einer sehr hohen Leitfähigkeit der Beschichtung und somit zu einer guten Ladungsableitung durch diese.

Durch die Tatsache der flächendeckenden Beschichtung des gesamten Bauteiles wird eine sehr große Querschnittsfläche für die Ableitung hoher elektrischer Ströme und Spannungen zur Verfügung gestellt. Somit entsteht im Falle eines Blitzeinschlages in der Beschichtung keine gefährliche Temperaturüberhöhung durch lokale Ströme, und es kommt zu keiner Degeneration der darunter liegenden Polymerschichten oder zu Überhitzung der elektrischen Komponenten.

Besondere Vorteile ergeben sich, falls die teilleitfähige Oberflächenbeschichtung bei kleinen Feldstärken einen wesentlich höheren Widerstand aufweist als z. B. metallische Leiter, welche als Netz in die Windkraftanlagen zur Blitzableitung einimprägniert sind. Somit kommt es zu keinem starken Polarisationseffekt, welcher zur Bildung einer Blitzentladung beitragen könnte. Folglich wird die Wahrscheinlichkeit eines Blitzeinschlages vermindert.

Im Folgenden werden anhand von schematischen, die Erfindung nicht einschränkenden Figuren Ausführungsbeispiele beschrieben.

Die Figuren zeigen im Einzelnen:
- Figur 1: zeigt ein Diagramm, bei dem der spezifische Widerstand 1 der Oberflächenbeschichtung gegenüber der Feldstärke 2 aufgetragen ist,
- Figur 2: zeigt Blitzschutzvorrichtungen an unterschiedlichen Rotorblättern 11 von Windkraftanlagen, nach dem Stand der Technik,
- Figur 3: zeigt den Polarisationseffekt an exponierten statischen Objekten,
- Figur 4: zeigt ein Diagramm, in welchem eine Oberflächenbeschichtung bei einer Pyrolyse verglast,
- Figur 5: zeigt ein mikroskopisches Bild mit der Darstellung hoch leitfähiger Antimon dotierter Zinnoxid-Füllstoffpartikel, welche sich auf einem Glimmersubstrat befinden und
- Figur 6: zeigt entsprechend Figur 5 hochleitfähige Zinnoxid-Füllstoffpartikel, wobei ein Gemisch aus plättchenförmigem Substrat und globularem Substrat vorliegt.

Im Verlauf von Gewittern entstehen beachtliche Raumladungen. In einer geladenen Gewitterwolke können weitere Ladungstrennungsmechanismen hinzukommen. Wird ein Blitz ausgelöst, so findet ein Potentialausgleich statt. Dieser geschieht entweder in einem Wolkenblitz, also innerhalb der Wolke, oder in einem Erdblitz, also zwischen Erdboden und dem unteren Teil der Wolke. Für Blitze zwischen den Wolken und der Erde muss der Potentialunterschied einige 10.000.000 V betragen. In der Luft kommt es erst zu einer elektrischen Funkenentladung bei einer elektrischen Feldstärke von ca. 3.000.000 V/m, was der sogenannten Durchbruchsfeldstärke entspricht. Dieser Wert sinkt jedoch stark mit zunehmender Luftfeuchtigkeit. Allerdings werden solche Feldstärken in einer Gewitterwolke bisher nicht gemessen. Messungen ergeben nur extrem selten Feldstärken von über 200.000 V/m. Dieser Wert liegt deutlich unter dem Wert der Durchbruchsfeldstärke. Man geht heute davon aus, dass die Luft zuerst durch Ionisation leitfähig gemacht werden muss, damit es zu einer Blitzentladung kommen kann.

Der nach Erde fließende Strom ruft an vorhandenen Widerständen Spannungsabfall und damit ein Potentialgefälle um den Einschlagspunkt herum hervor. Der Einschlag eines Blitzes entspricht dem Zuschalten eines Stromkreises, welcher von einer Energiequelle mit eingeprägtem Strom gespeist wird.

Die betrachtete Feldstärke ist regelmäßig die, welche durch die Blitzentladung und die am Blitz-Einschlagsort entstehende Potentialdifferenz aufgebaut wird.

Figur 1 zeigt ein Widerstands-Feldstärke-Diagramm, wobei eine Oberflächenbeschichtung bestehend aus einem Verbundwerkstoff betrachtet wird, welche 25 Vol.-% Füllung, bestehend aus plättchenförmigem Antimonzinnoxid/Sb:SnO2 aufweist. Das Diagramm zeigt einen nichtlinearen Verlauf des spezifischen Widerstands bei zunehmender Feldstärke. Bei niedrigen Feldstärken ist der Widerstand hoch und bei hohen Feldstärken liegt ein sehr kleiner Widerstand vor.

In Figur 2 wird Stand der Technik dargestellt in Form von Rotorblättern 11 einer Windkraftanlage. Dabei sind unterschiedliche Formen der Blitzableitung im Einsatz. Im linken und im mittleren dargestellten Rotorblatt 11 ist ein innenliegender Leiter 3 skizziert, dessen Endpunkt 4 am äußersten Ende eines Rotorblattes 11 an die Oberfläche kommt. Im links in der Figur 2 dargestellten Rotorblatt ist der innere Leiter 3 im Endbereich teilweise als Netz dargestellt.

Das in Figur 2 rechts dargestellte Rotorblatt 11 weist ein metallisches Netz 5 auf, welches vorzugsweise in eine deckende Lackschicht auf der Oberfläche des Rotorblattes eingearbeitet wird. Dadurch entsteht lokal eine metallische Struktur, welche entstehende Ströme und Spannungen durch eine Verbindung zum Stativ der Windkraftanlage erdet.

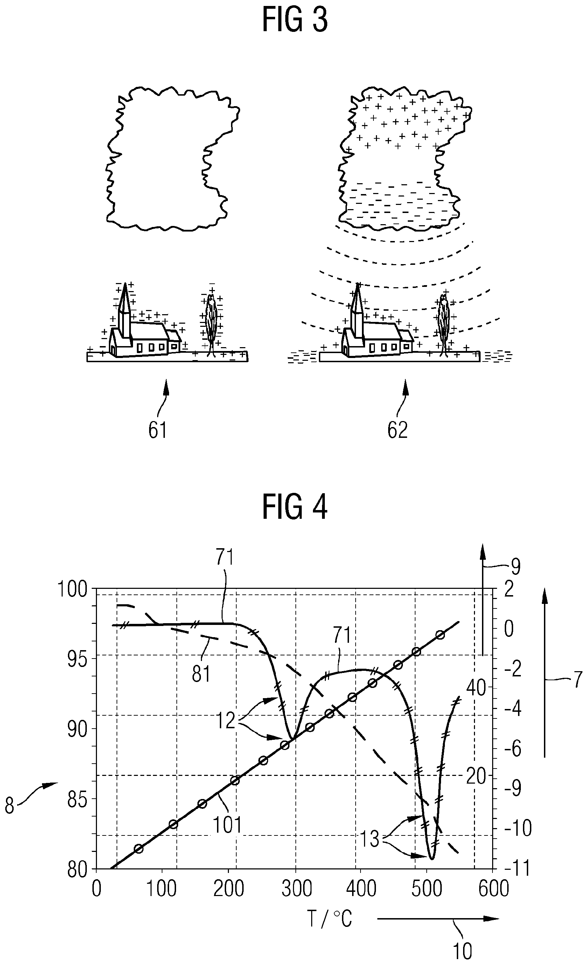

Figur 3 zeigt im linken Teil eine Szene auf der Erdoberfläche mit Bebauung und Gewitterwolke, wobei keine Polarisation vorliegt, sowie eine Szene, bei der eine Polarisation 62 vorliegt, indem ein Blitzschlag aus einer geladenen Gewitterwolke zur Erde hin erfolgt ist.

Plättchenförmige, keramische Füllstoffe weisen mehrere Vorteile gegenüber rein kugelförmigen Partikeln auf:
- Sie haben eine frühe Perkolationsschwelle, welche teilweise unter 20 Vol.-% in Abhängigkeit von einem Formfaktor liegt,
- sie führen zu einer Verlängerung des Erosionskanals durch den Verbundwerkstoff,
- sie haben durch den großen Formfaktor, Länge/Durchmesser >30 ein sehr langsames Absetzverhalten bei der Verarbeitung, beispielsweise der Sprühapplikation,
- durch das leichte Trägermaterial sowie die geringe Einwaage/Füllstoff kommt es zu einer geringen Verbundwerkstoffdichte, was dem Leichtbauprinzip zuträglich ist,
- die Partikel sind korrosionsbeständig,
- die Partikel sind kommerziell verfügbar und somit kostengünstig.

Unter Verwendung einer Polysilazan-Matrix ist es möglich, einen elektrisch leitfähigen Verbundwerkstoff zu erzeugen, welcher bei Raumtemperatur sprühbar ist und im Anschluss annähernd bei Raumtemperatur aushärtet.

Vorteile dieser Matrix sind:
- eine gute Haftung auf einem epoxidischen Untergrund,
- sehr guter Korrosionsschutz, da Polysilazan selbst als Korrosionsschutz eingesetzt wird,
- die Matrix ist teilentladungsresistent und temperaturstabil,
- die Matrix ist in Verbindung mit den keramischen Partikeln ein guter Schutz gegen Abrasion, beispielsweise durch Hagel oder Sand, und sonstigen Umwelteinflüssen wie Meerwasser/Meerluft/Gase.

Eine entsprechende Erfindung aufgebaute Oberflächenbeschichtung kann durch Pyrolyse verschiedener siliziumhaltiger, teilorganischer Matrizen eine Widerstandsreduktion der Verbundwerkstoffschicht um mehrere Dekaden herbeiführen, sodass die elektrische Leitfähigkeit der reinen Pulver-Leitfähigkeit, gemessen an einem Pulverstempel, gleichkommt. Der Druck des Pulverstempels ist hierbei so zu wählen, dass die Verdichtung und somit der Volumen-Packungsdichte-Koeffizient dem der Volumeneinwaage in den Verbundwerkstoff gleich ist.

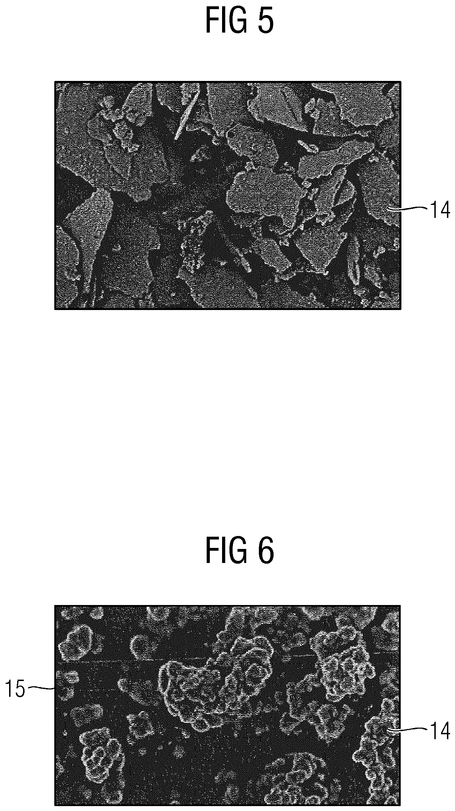

Figur 5 zeigt Füllstoffpartikel in plättchenförmiger Form, vorzugsweise auf Glimmersubstrat. Die Plättchen bestehen oberflächlich aus hoch leitfähigem Antimon dotiertem SnO2. Durch den Einsatz eines derartigen Füllstoffes wird der elektrische Widerstand bei hohen Feldstärken wesentlich erniedrigt. Aus Versuchen hat sich ergeben, dass eine Zumischung von globularen Partikeln in den Füllstoff, entsprechend Figur 6, zu einer zusätzlichen Steigerung der Leitfähigkeit der Beschichtung der Füllstoffpartikel und damit der Oberflächenbeschichtung beitragen kann. Dabei wird gezeigt, dass Mischungen aus Kugeln und Plättchen desselben Materials um eine Dekade besser leitfähig sind als die reinen Partikelformen.

In Figur 5 ist im Wesentlichen plättchenförmiges Metalloxid sichtbar. In Figur 6 ist sowohl plättchenförmiges Metalloxid 14 als auch kugelförmiges Metalloxid 15 dargestellt. Als Substrat dient zum Teil Glimmer und für die Ausbildung von globularen Partikeln kann vorzugsweise Silizium bzw. Siliziumoxid verwendet werden. Insbesondere wird Quarzmehl eingesetzt.

Das in Verbindung mit den Figuren 5 und 6 genannte Zinnoxid ist entsprechend der Erfindung mit Antimon dotiert.

Als Matrix können verschiedene Werkstoffe für eine Blitzschutzbeschichtung verwendet werden. Theoretisch könnten Duroplaste wie beispielsweise Epoxide, Thermoplaste wie beispielsweise PEEK, PAI oder PEI eingesetzt werden.

Die Erfindung bezieht sich insbesondere auf Polysiloxane wie beispielsweise Silikonelastomere oder Silikonharze. Eine Auftragung des Verbundwerkstoffes kann durch Pinselbeschichtung, Tauchbeschichtung, Pulverbeschichtung geschehen.

Durch Anwendung von definierten Metalloxidpartikeln als hoch leitfähiges Füllstoffmaterial kann die optische Absorption in bestimmten Wellenlängenbereichen des Füllstoffes, beispielsweise Zinnoxid, genutzt werden, um durch eine hohe Bestrahlungsleistung, beispielsweise Infrarotbestrahlung, eine sehr große Oberflächentemperatur herbeizuführen. Bei geeigneter Dauer und Intensität wird eine Pyrolyse der Verbundwerkstoffschicht herbeigeführt, wobei der organische Anteil der Matrix ausgebrannt wird. Hierdurch entsteht bei einer geeigneten Matrixformulierung ein stabiles SiO₂-Gerüst, was als keramisches Glas bezeichnet werden kann. Die Bestrahlungsintensität und -dauer muss an den Pyrolyseprozess und die Schichtdicke der Beschichtung angepasst werden, sodass die grundsätzliche Funktionsfähigkeit des darunter liegenden Materials, wie beispielsweise glasfaserverstärkter Kunststoff mit einer maximalen Temperaturbelastung von 155 °C, nicht beeinträchtigt wird. Durch dieses Verfahren ist es möglich, eine hoch leitfähige, korrosionsbeständige und wasserabweisende Schicht auf der Oberfläche von organischen, niedertemperaturstabilen Bauteilen zu erzeugen, ohne das darunter liegende Material zu beschädigen, wie es z.B. in einem kompletten Ofen-Temperatur-Zyklus zur Aushärtung der Schicht der Fall wäre.

Figur 4 zeigt ein Protokoll einer Messung an einer Polysilazan-Matrix. Auf der Abszisse aufgetragen ist die Temperatur 10 in Grad Celsius. Auf drei verschiedenen Ordinaten ist, von links nach rechts aufgetragen, zum einen links das Gewicht in Gewichtsprozent 8, zum anderen die Zeit t mit Bezugszeichen 9 und der Wärmestrom 7 ganz rechts in der Figur 4. Die eigentliche Sinterkurve wird dargestellt durch den Graphen 71, Wärmestrom/Temperatur. Dabei sind die Aushärtung 12 und die Pyrolyse 13 jeweils als ein energieaufwändiger Vorgang bei einer bestimmten Temperatur erkennbar.

Eine Kurve 81 stellt den Verlauf des Gewichtes der Oberflächenbeschichtung in Gewichtsprozent dar in Abhängigkeit von der Temperatur 10. Die Kurve 101 stellt den Verlauf der Temperatur in Abhängigkeit von der Zeit dar.

Da für die Oberflächenbeschichtung ein Verbundwerkstoff ausgewählt ist, ist zunächst eine Matrix zu benennen, die entsprechend der Erfindung ein Polymer ist. Insbesondere wird ein Polysiloxan oder ein Polysilazan eingesetzt. Als nächstes wird der Füllstoff betrachtet, der in diesem Fall ein, Substrat beispielsweise Glimmer, ist keramischer aus einem plättchenförmigen. Dieser Füllstoff wird mit einer elektrisch leitfähigen metalloxidischen Beschichtung bestehend aus Antimonzinnoxid, Sb:SnO2, bzw. Antimon dotiertem Zinnoxid dargestellt.

Dabei handelt es sich um eine teilleitfähige Beschichtung, die innerhalb der Perkolation mit mindestens 20 Vol.-% Fülleinwaage bei niedrigen Feldstärken einen hohen Widerstand aufweist. In Kombination damit weist diese Schicht jedoch bei großen Feldstärken durch das nichtlineare Verhalten des Partikel-Widerstands eine sehr hohe Leitfähigkeit auf. In einer doppellogarithmischen Auftragung der Spannungswiderstands-Kennlinie einer solchen Verbundwerkstoffschicht ergibt sich der Nichtlinearitätsfaktor α als Steigung des linearen Widerstandsabfalls mit zunehmender Feldstärke. Siehe hierzu Figur 1.

Die Messung der Nichtlinearität einer Verbundwerkstoffschicht bestehend aus einer Polysilazan-Matrix mit einem plättchenförmigen Füllstoff, der mit Antimondotiertem Zinnoxid, 15 mol-% Antimon ergibt einen Nichtlinearitätsfaktor von 3,7. Dieser stimmt mit den Messungen weniger dotierter, aber sonst äquivalenter Systeme überein. Der resultierende Widerstand bei einer Feldstärke E = 550 V/mm unter einer Stromdichte von j= 28 A/mm² ergibt sich p = 2 Ωcm. Gemessen wurde dabei durch einen Ladungspuls mit 55 kV sowie 280 A, um einen realen Blitzschlag zu simulieren. Dabei kommt es lokal zu Leitpfadbildungen, jedoch ist keine mechanische Beschädigung oder gar Abplatzung der Schicht zu erkennen. Somit kommt es auch am Punkt des Blitzeinschlages zu keiner mechanischen Beschädigung des darunterliegenden Flügels. Im weiteren Verlauf wird die Ladung radial vom Einschlagpunkt über die gesamte Oberfläche abgeleitet, was zu zunehmend kleineren Stromdichten führt und somit unkritisch ist.

## Patentansprüche

1. Oberflächenbeschichtung zur Blitzableitung, dargestellt durch einen elektrisch leitfähigen Verbundwerkstoff, welcher folgendes aufweist:
- eine Matrix aus einem Raumtemperatur- oder niedertemperaturhärtenden Polymer
- einen Füllstoff aus plättchenförmigen, keramischen Partikeln (14), wobei
die plättchenförmigen, keramischen Partikel (14) mit einer elektrisch leitfähigen, metalloxidischen Beschichtung, insbesondere einer Beschichtung aus Antimon-dotiertem Zinnoxid Sb:SnO2, die bei geringen Feldstärken einen hohen elektrischen Widerstand und bei großen Feldstärken einen sehr viel kleineren elektrischen Widerstand aufweist, versehen sind, wobei die Antimon dotierte Zinnoxid-Schicht auf den plättchenförmigen, keramischen Partikeln (14) mit mindestens 10 mol-% Antimon Sb gefüllt ist.

2. Oberflächenbeschichtung nach Anspruch 1, wobei die plättchenförmigen, keramischen Partikel(14) durch Glimmer dargestellt sind.

3. Oberflächenbeschichtung nach Anspruch 1 oder 2, wobei die elektrisch leitfähige, metalloxidische Beschichtung der plättchenförmigen, keramischen Partikel (14) durch eine metalloxidische Beschichtung dargestellt ist, welche einen nichtlinearen Verlauf des elektrischen Widerstandes in Abhängigkeit von der elektrischen Feldstärke aufweist.

4. Oberflächenbeschichtung nach einem der Ansprüche 1 bis 3, wobei
der Füllstoff ein Gemisch aus jeweils keramischen Partikeln ist, welche mit einer Antimon dotierten Zinnoxid-Schicht versehenen sind und plättchenförmig und/oder kugelförmig ausgebildet sind.

5. Oberflächenbeschichtung nach einem der Ansprüche 1 bis 4, wobei die Matrix aus einem Polysilazan oder aus einem Polysiloxan dargestellt ist.

6. Oberflächenbeschichtung nach Anspruch 5, wobei durch eine Pyrolyse organische Anteile eliminiert sind und mit der Matrix aus Polysilazan ein stabiles SiN-Gerüst vorliegt oder mit der Matrix aus Polysiloxan ein stabiles SiO₂-Gerüst.

7. Verfahren zur Darstellung einer Oberflächenbeschichtung nach einem der Ansprüche 1 bis 6, wobei
die leitfähige Oberflächenbeschichtung lösemittelhaltig ist, flüssig aufgetragen wird, aushärtet und bei kurzen Temperaturintervallen mit Temperaturen bis zu 700 °C eine Pyrolyse der Oberflächenbeschichtung stattfindet, sodass eine glasartige, temperaturbeständige, elektrisch leitfähige Oberflächenbeschichtung erzielt wird.

8. Verfahren nach Anspruch 7, wobei
die Antimon dotierte Zinnoxid-Schicht der plättchenförmigen, keramischen Partikel (14) mit mindestens 10 mol-% Antimon Sb gefüllt wird.

9. Verwendung einer Oberflächenbeschichtung entsprechend einem der Ansprüche 1 bis 6 zum Blitzschutz auf nichtmetallischen Rotorblättern einer Windkraftanlage.

10. Verwendung einer Oberflächenbeschichtung entsprechend einem der Ansprüche 1 bis 6 zum Blitzschutz auf nichtmetallischen Oberflächenbereichen eines Flugzeuges.

11. Verwendung einer Oberflächenbeschichtung entsprechend einem der Ansprüche 1 bis 6 zum Blitzschutz auf kohlefaserverstärkten Bauteilen.

12. Verwendung einer Oberflächenbeschichtung entsprechend einem der Ansprüche 1 bis 6 zum Blitzschutz auf Bauteilen aus faserverstärktem Kunststoff.

## Claims

1. Surface coating for lightning conduction, represented by an electrically conductive composite material which comprises the following:
- a matrix made of a polymer curing at room temperature or low temperature,
- a filler made of lamellar ceramic particles (14),
the lamellar ceramic particles (14) being provided with an electrically conductive, metal-oxide coating, in particular a coating consisting of antimony doped tin oxide Sb:Sn02 which has a high electrical resistance at small field strengths and a very much smaller electrical resistance at large field strengths, the antimony doped tin oxide layer on the lamellar ceramic particles (14) being filled with at least 10 mol% of antimony Sb.

2. Surface coating according to Claim 1,
the lamellar ceramic particles (14) being represented by mica.

3. Surface coating according to Claim 1 or 2,
the electrically conductive, metal-oxide coating of the lamellar ceramic particles (14) being represented by a metal-oxide coating which exhibits a nonlinear profile of the electrical resistance as a function of the electrical field strength.

4. Surface coating according to any of Claims 1 to 3,
the filler being a mixture of particles which are ceramic in each case and are provided with an antimony doped tin oxide layer and are of lamellar and/or spherical formation.

5. Surface coating according to any of Claims 1 to 4,
the matrix being prepared from a polysilazane or from a polysiloxane.

6. Surface coating according to Claim 5,
organic fractions being eliminated by pyrolysis and with the polysilazane matrix a stable SiN framework being present, or with the polysiloxane matrix a stable SiO₂ framework.

7. Process for preparing a surface coating according to any of Claims 1 to 6,
the conductive surface coating comprising solvent, being applied in liquid form, and curing, and pyrolysis of the surface coating taking place at short temperature intervals with temperatures up to 700°C, to give a glasslike, temperature-stable, electrically conductive surface coating.

8. Process according to Claim 7,
the antimony doped tin oxide layer of the lamellar ceramic particles (14) being filled with at least 10 mol% of antimony Sb.

9. Use of a surface coating conforming to any of Claims 1 to 6 for lightning protection on nonmetallic rotor blades of a wind power installation.

10. Use of a surface coating conforming to any of Claims 1 to 6 for lightning protection on nonmetallic surface regions of an aircraft.

11. Use of a surface coating conforming to any of Claims 1 to 6 for lightning protection on carbon fiber-reinforced components.

12. Use of a surface coating conforming to any of claims 1 to 6 for lightning protection on components made of fiber-reinforced plastic.

## Revendications

1. Revêtement de surface pour faire office de paratonnerre, représenté par un composite électroconducteur qui présente ce qui suit :
- une matrice réalisée à partir d'un polymère durcissant à la température ambiante ou à basse température ;
- une matière de charge réalisée à partir de particules céramiques (14) en forme de plaquettes ; dans lequel
les particules céramiques (14) en forme de plaquettes sont munies d'un revêtement électroconducteur à base d'un oxyde métallique, en particulier d'un revêtement réalisé à partir d'oxyde d'étain dopé à l'antimoine Sb:SnO₂, qui présente une résistance électrique élevée dans des conditions d'intensités de champs minimes et une résistance électrique très inférieure dans des conditions d'intensités de champs élevées, dans lequel la couche d'oxyde d'étain dopé à l'antimoine sur les particules céramiques (14) en forme de plaquettes comprend, à titre de matière de charge, au moins 10 moles % d'antimoine Sb.

2. Revêtement de surface selon la revendication 1, dans lequel les particules céramiques (14) en forme de plaquettes sont représentées par du mica.

3. Revêtement de surface selon la revendication 1 ou 2, dans lequel le revêtement électroconducteur à base d'un oxyde métallique des particules céramiques (14) en forme de plaquettes est représenté par un revêtement à base d'un oxyde métallique qui présente une allure non linéaire de la résistance électrique en fonction de l'intensité de champ électrique.

4. Revêtement de surface selon l'une quelconque des revendications 1 à 3, dans lequel la matière de charge est un mélange de particules respectivement céramiques qui sont munies d'une couche d'oxyde d'étain dopé à l'antimoine et qui sont réalisées sous la forme de plaquettes et/ou sous la forme de sphères.

5. Revêtement de surface selon l'une quelconque des revendications 1 à 4, dans lequel la matrice est représentée par un polysilazane ou par un polysiloxane.

6. Revêtement de surface selon la revendication 5, dans lequel des fractions organiques sont éliminées par une pyrolyse et, avec la matrice en polysilazane, est présente une structure stable en SiN ou avec la matrice en polysiloxane, une structure stable en SiO₂.

7. Procédé pour la préparation d'un revêtement de surface selon l'une quelconque des revendications 1 à 6, dans lequel le revêtement conducteur de surface contient un ou plusieurs solvants, est appliqué sous forme liquide, est durci, tandis qu'une pyrolyse du revêtement de surface a lieu à de courts intervalles de températures avec des températures jusqu'à 700 °C, si bien que l'on obtient un revêtement de surface électroconducteur vitreux, résistant à la température.

8. Procédé selon la revendication 7, dans lequel la couche d'oxyde d'étain dopé à l'antimoine sur les particules céramiques (14) en forme de plaquettes comprend, à titre de matière de charge, au moins 10 moles % d'antimoine Sb.

9. Utilisation d'un revêtement de surface correspondant à l'une quelconque des revendications 1 à 6 à titre de paratonnerre sur des pales de rotor non métalliques d'une éolienne.

10. Utilisation d'un revêtement de surface correspondant à l'une quelconque des revendications 1 à 6 à titre de paratonnerre sur des zones superficielles non métalliques d'un aéroplane.

11. Utilisation d'un revêtement de surface correspondant à l'une quelconque des revendications 1 à 6 à titre de paratonnerre sur des composants renforcés avec des fibres de carbone.

12. Utilisation d'un revêtement de surface correspondant à l'une quelconque des revendications 1 à 6 à titre de paratonnerre sur des composants réalisés à partir d'une matière synthétique renforcée avec des fibres.
